# EUROPÄISCHE PATENTSCHRIFT

(11) **EP 3 111 768 B1**
(45) Veröffentlichungstag und Bekanntmachung des Hinweises auf die Patenterteilung: **27.03.2019**
(21) Anmeldenummer: 15174821.7
(22) Anmeldetag: 01.07.2015
(51) Int. Cl.: A23G 1/26, A23G 1/00, A23G 3/34, A23G 3/02, A23G 7/00, B65G 1/00

(54) **ANLAGE ZUR FERTIGUNG VON NAHRUNGSMITTELN**
PRODUCTION PLANT FOR FOOD PRODUCTS
INSTALLATION DE FABRICATION DE PRODUITS ALIMENTAIRES

(43) Veröffentlichungstag der Anmeldung: 04.01.2017
(73) Patentinhaber: Bühler GmbH, 51702 Bergneustadt (DE)
(72) Erfinder: Lenssen, Sebastian, 51147 Köln (DE); Fuhr, Benjamin, 51580 Reichshof (DE); Baldus, Daniel, 51580 Reichshof (DE); Walter, Christian, 9500 Wil (CH); Hilker, Katharina, 32369 Rahden (DE)
(74) Vertreter: Hepp Wenger Ryffel AG

(56) Entgegenhaltungen:
- EP-A1- 0 940 086
- EP-A1- 1 172 039
- WO-A2-2013/164765
- DE-C1- 3 920 907
- DE-T2- 69 628 245
- GB-A- 2 476 793
- US-A- 4 755 096
- US-A1- 2006 133 917

## Beschreibung

Die Erfindung betrifft eine Anlage zur Fertigung von Nahrungsmitteln, insbesondere eine Schokoladenanlage, mit mindestens einer Behandlungsstation und mit mindestens einem Industrieroboter, ein Verfahren zum Transportieren mindestens eines Produktträgers, insbesondere einer Form, zwischen zwei Behandlungsstationen, die Verwendung eines Industrieroboters und ein Verfahren zum Umrüsten einer Anlage zur Fertigung von Nahrungsmitteln.
Für die Herstellung von Süsswaren, im Speziellen von Schokoladenprodukten, werden Formen, bevorzugt aus Kunststoff (z.B. eine Blister- oder Sichtverpackung), Metall oder auch Holz, in unterschiedlichen Grössen und mit darin ausgeformten produktspezifischen Kavitäten verwendet. Die Formen werden typischerweise mittels einer Kette oder eines Endlosbandes zwischen den Bearbeitungsstationen bewegt, wie dies zum Beispiel in US 5180602 oder DE 3740109 gezeigt ist.
Die Kette schiebt oder zieht die Formen. Auf einem Förderband könnten die Formen auch lose aufliegen und über den Reibschluss mitgenommen werden. Dabei werden die Formen im Takt oder in einem kontinuierlichen Betrieb typischerweise in eine Richtung zwischen einzelnen Bearbeitungsstationen bewegt.

Ketten- und Bandförderer werden
in der Regel raumfest zwischen ebenfalls raumfest installierten Behandlungsstationen angebracht. Dies ist günstig für grosse Anlagen, bei denen der Produktionsablauf fest vorgegeben ist und die selten umgerüstet werden müssen.
Anlagen zur Fertigung von Lebensmitteln sind häufig Gesamtanlagen mit verschiedenen Behandlungsstationen oder Abschnitten. Die bekannten Anlagen werden häufig auf spezielle Verwendungszwecke, zum Beispiel von gefüllten Pralinen oder Tafeln, zugeschnitten, um hohe Durchsätze bei grosser Präzision zu ermöglichen. Die Umrüstung von einem Produkt zu einem anderen Produkt ist in der Regel aufwendig, teilweise sogar unmöglich.

Dies kann problematisch sein, wenn kleinere Chargen gefertigt werden sollen oder wenn ein neues Produkt eingeführt werden soll. Die Umrüstung ist dann so aufwendig, dass ein hohes wirtschaftliches Risiko damit verbunden ist.

Aus der EP0940086 ist eine Anlage zur Herstellung von Nahrungsmitteln bekannt, bei welcher Abschnitte der Produktionsstrecke durch Transfereinrichtungen, wie Roboter oder pneumatische Umsetzvorrichtungen, überbrückt werden können, indem die in den Produktträger angeordneten Nahrungsmittel zwischen mechanisch voneinander unabhängigen Abschnitten übergeben werden.

In der EP1172039 ist eine Vorrichtung zum Bedrucken von Lebensmitteln gezeigt, bei der Roboter Formen von einem Stapel auf ein Band und von einem Band auf einen Stapel setzen.

Mehr Flexibilität ist mit einem Transportwagensystem zu erreichen, bei dem sich Transportwagen mit einem eigenen Antrieb entlang von Bahnelementen bewegen, die modular zu einer Transportbahn kombinierbar sind. Auch bei diesem System muss die Bahn für einen veränderten Produktionslablauf umgebaut werden.

Für Hersteller qualitativ hochwertiger Lebensmittelprodukte, insbesondere Schokoladenprodukte, die Kleinmengen an saisonalen Produkten und für Marktests produzieren oder den Weg zur industriellen Verarbeitung einschlagen möchten, werden kleine, flexible Anlagen mit leichter Handhabung und hohem hygienischem Standard benötigt.

Es besteht daher die Aufgabe, eine Anlage zur Fertigung von Nahrungsmitteln, insbesondere eine Schokoladenanlage, und ein entsprechendes Verfahren zur Verfügung zu stellen, welche die Nachteile des Bekannten überwinden, die eine hohe Flexibilität und eine bedienerfreundliche, automatisierte Produktion erlauben.

Die Aufgabe wird durch die Merkmale der unabhängigen Ansprüche gelöst. Vorteilhafte Weiterbildungen sind in der nachfolgenden Beschreibung, den Figuren und in den abhängigen Patentansprüchen dargelegt.

Die Aufgabe wird zunächst gelöst durch eine Anlage zur Fertigung von Nahrungsmitteln, insbesondere eine Schokoladenanlage, mit mindestens einer Behandlungsstation und mit mindestens einem Industrieroboter. Der Industrieroboter umfasst mindestens einen Effektor mit mindestens einer Aufnahme für mindestens einen Produktträger und mindestens einen Manipulator zum Transfer des mindestens einen Produktträgers.

Der Industrieroboter umfasst zusätzlich zumindest eine Steuereinrichtung und bevorzugt zumindest eine zugehörige Bearbeitungseinrichtung.

Die Steuereinrichtung ist derart eingestellt oder einstellbar, dass der Produktträger, zwischen zwei Behandlungsstationen, insbesondere unter Sensorkontrolle, entlang eines vorbestimmbaren Weges bewegbar ist.

Die Steuereinrichtung ist bevorzugt derart eingestellt oder einstellbar, dass der Produktträger, bevorzugt an einer und/oder gegenüber einer Behandlungsstation und oder zwischen zwei Behandlungsstationen, durch den Industrieroboter rüttelbar und/oder schleuderbar und/oder wendbar und/oder drehbar und/oder verschiebbar und/oder hebbar und/oder absenkbar und/oder beblasbar und/oder absaugbar und/oder reinigbar und/oder ein- und/oder ausstapelbar und/oder ausschlagbar und/oder entleerbar und/oder befüllbar und/oder temperierbar ist.

Bevorzugt ist der Industrieroboter multifunktional und umfasst insbesondere mehrere Bearbeitungseinrichtungen, wobei die Steuereinrichtung derart eingestellt oder einstellbar ist, dass mehrere der oben aufgeführten Bearbeitungsschritte seriell oder parallel ausführbar sind.

Insbesondere kann der Industrieroboter Bearbeitungsschritte ausführen, die sonst von den Behandlungsstationen übernommen werden.

Der Industrieroboter kann so ausgestattet und steuerbar sein, dass der Produktträger rüttelbar ist. Das in dem Produktträger befindliche Lebensmittel, beispielsweise eindosierte, noch flüssige Schokolade, verteilt sich dann zum Beispiel gleichmässig in Formen des Produktträgers, eingefülltes Gas entweicht aus der dosierten Masse und/oder fertige oder teilfertige Produkte lösen sich vom Produktträger. Der Industrieroboter kann über eine Rüttelvorrichtung verfügen oder das Rütteln mittels Bewegungen von Manipulator und Effektor erzeugen.

Der Industrieroboter kann so ausgestattet und steuerbar sein, dass der Produktträger schleuderbar ist. Das in dem Produktträger befindliche Lebensmittel, beispielsweise eindosierte, noch flüssige Schokolade, verteilt sich dann zum Beispiel gleichmässig an den Wänden von Formen und bildet einen Hohlkörper oder eine Hülse. Der Industrieroboter kann über eine Schleudervorrichtung verfügen oder das Schleudern mittels Bewegungen von Manipulator und Effektor erzeugen

Der Industrieroboter kann so ausgestattet und steuerbar sein, dass der Produktträger wendbar ist. Überschüssiges Lebensmittel kann dann beispielweise aus den Formen herauslaufen und/oder fertige oder teilfertige Produkte können aus dem Produktträger herausfallen. Der Industrieroboter kann über eine Wendevorrichtung verfügen oder das Wenden ist mittels Bewegungen von Manipulator und Effektor erzeugbar.

Der Industrieroboter kann so ausgestattet und steuerbar sein, dass der Produktträger drehbar ist. Damit kann beispielweise die Abarbeitungsrichtung bezüglich von Formen auf dem Produktträger geänderte werden. Der Produktträger kann auch, zum Beispiel wenn er unbenutzt ist, kopfüber vom Industrieroboter transportiert werden. Der Industrieroboter kann über eine Drehvorrichtung verfügen oder das Drehen ist mittels Bewegungen von Manipulator und Effektor erzeugbar.

Der Industrieroboter kann so ausgestattet und steuerbar sein, dass der Produktträger verschiebbar ist. Der Produktträger kann so zum Beispiel zusammen mit oder gegenüber Komponenten der Behandlungsstation bewegt werden, beispielweise um die Form beim Giessen von Schokoladenmasse mit der Giessdüse zu bewegen oder von der Giessdüse wegzubewegen. Der Industrieroboter kann über eine Verschiebevorrichtung verfügen oder das Verschieben ist mittels Bewegungen von Manipulator und Effektor erzeugbar.

Der Industrieroboter kann so ausgestattet und steuerbar sein, dass der Produktträger heb- und/oder absenkbar ist. Der Produktträger kann so zum Beispiel in vertikaler Richtung an die Behandlungsstation herangebracht und weggeführt werden, beispielweise an eine Lanze zum Stechen oder einen Stempel zum Formen. Der Industrieroboter kann über eine Hebe- und/oder Senkvorrichtung verfügen oder das Heben und/oder Senken sind mittels Bewegungen von Manipulator und Effektor erzeugbar.

Der Industrieroboter kann so ausgestattet und steuerbar sein, dass der Produktträger beblas- und/oder absaugbar ist. Ein gekühlter Produktträger kann beispielsweise mit trockener Luft angeblasen werden, um Kondensation zu vermeiden, oder es können Staub oder Produktreste vom Produktträger abgesaugt werden.
Es kann auch heisse oder kalte Luft herangeführt werden, um den Produktträger und/oder das Produkt entsprechend zu temperieren. Der Industrieroboter kann dazu über eine Vorrichtung zum Erzeugen einer Gasströmung und/oder eines Unterdrucks verfügen oder über einen Anschluss an eine solche Vorrichtung.

Der Industrieroboter kann so ausgestattet und steuerbar sein, dass der Produktträger reinigbar ist. Befüllte Produktträger können damit eine definierte Oberfläche erhalten oder Produktreste können entfernt werden. Der Industrieroboter kann dazu über eine Rolle und/oder einen Schaber verfügen.

Der Industrieroboter kann so ausgestattet und steuerbar sein, dass der Produktträger ein- und/oder ausstapelbar ist. Die Produktträger können vom Roboter übernommen und auch wieder abgegeben werden, bevorzugt kann der Industrieroboter, zumindest vorübergehend einen ganzen Stapel von Produktträgern halten, übernehmen und/oder abgeben. Der Industrieroboter kann dazu über eine Ein- und-/oder Ausstapelvorrichtung verfügen.

Der Industrieroboter kann so ausgestattet und steuerbar sein, dass der Produktträger ausschlagbar ist. Auf diese Weise können Produkte und/oder Produktreste aus dem Produktträger entfernt werden. Der Industrieroboter kann dazu über eine Ausschlagvorrichtung verfügen.

Der Industrieroboter kann so ausgestattet und steuerbar sein, dass der Produktträger entleer- und/oder befüllbar ist. Der Produktträger kann mit Produkt oder Putzmittel beladen und/oder wieder entladen werden. Ein teilgefüllter Produktträger kann weiter gefüllt werden. Der Industrieroboter kann dazu über eine Absaugvorrichtung, eine Füllstation, eine Einleger, eine Zuführleitung oder/eine Abführleitung verfügen.

Der Industrieroboter kann so ausgestattet und steuerbar sein, dass der Produktträger temperierbar ist. Der Produktträger und/oder das Produkt können somit auf eine gewünschte Temperatur gebracht, erwärmt oder abgekühlt, und/oder auf einer gewünschten Temperatur gehalten werden. Der Industrieroboter kann dazu über eine Temperiervorrichtung verfügen, mit welcher beispielswiese über Konvektion und/oder Konduktion ein Temperaturausgleich bewirkt wird.

Der Industrieroboter kann so ausgestattet und steuerbar sein, dass der Produktträger, insbesondere unter Sensorkontrolle, entlang eines vorbestimmbaren Weges bewegbar ist. Für das Dekorieren eines teilfertigen Produkts soll beispielsweise der Verfahrweg des Produktträgers, zum Beispiel an einer Giessmaschine, frei programmierbar sei, damit die Dekorationsmittel in gewünschter Weise auf das Produkt gelangen. Der Industrieroboter kann über eine Dekoriervorrichtung verfügen oder das Bewegen entlang eines vorbestimmbaren Weges ist mittels Bewegungen von Manipulator und Effektor erzeugbar.

Insbesondere umfasst der Industrieroboter mindestens einen Sensor, mit welchem erfassbar ist, ob ein Produktträger vorhanden ist und/oder ob ein Produkt im Produktträger vorhanden ist.

Bei einer Behandlungsstation handelt es sich um eine Kühlstation.

Die Steuereinrichtung ist derart eingestellt oder einstellbar, dass der Produktträger, an der und/oder gegenüber der Kühlstation entlang eines vorbestimmbaren Weges bewegbar ist.

Bei der Behandlungsstation handelt es sich bevorzugt um einen Formenanwärmer, eine Giessstation, eine Hülsenbildungsstation, eine Öffnungsbildungsstation, eine Füllstation, eine Deckelstation, eine Dekorierstation, eine Ausformstation, eine Ein- und/oder Ausstapelstation, eine Sprühstation, eine Druckerstation, eine Einlegestation, eine Verpackungsstation und/oder eine Auflegestation, insbesondere eine Folienauflegestation.

Bei der Bearbeitungseinrichtung handelt es sich bevorzugt um eine Rütteleinrichtung, eine Schleudereinrichtung, eine Wendeeinrichtung, eine Verschiebeeinrichtung, eine Hebe-ünd/oder Senkeinrichtung, eine Verdreheinrichtung, eine Schabereinrichtung, eine Rolleinrichtung, eine Blaseinrichtung und/oder eine Saugeinrichtung.

Damit können die bereits eingangs erwähnten Bearbeitungsschritte durchgeführt werden.

Die Behandlungsstationen sind bevorzugt zumindest teilweise mechanisch voneinander unabhängig, wobei die Behandlungsstationen insbesondere unabhängig voneinander in Betrieb nehmbar sind.

Dabei wird die Flexibilität der Anlage erhöht, da die Behandlungsstationen nachträglich ergänzt und/oder ausgetauscht werden können. So ist es beispielsweise denkbar, dass zunächst eine Anlage mit nur wenigen Bearbeitungsstationen in Betrieb genommen wird und weitere Bearbeitungsstationen später die Anlage ergänzen.
Bevorzugt ist der Industrieroboter verfahrbar. Alternativ kann der Industrieroboter fest an einer Raumposition, zum Beispiel auf dem Boden, an der Wand und/oder an der Decke, insbesondere direkt oder über ein Gestell, verankert sein.

Erfindungsgemäss weist die Anlage mindestens eine zentral angeordnete Kühlstation auf, die von mehr als einer Seite bedienbar ist.
Insbesondere bei der Produktion von gefüllten Schokoladenprodukten müssen Halbfabrikate erst abgekühlt werden, bevor diese weiter verarbeitet werden. Eine entsprechende Kühlstation, welche mehrfach während eines Produktionsvorganges verwendet wird, ist somit zentral, d.h. zwischen den Behandlungsstationen, angeordnet, so dass die vom Industrieroboter zurückgelegte Wege klein sind. Ferner kann durch die Bedienbarkeit der Kühlstation von mehr als einer Seite eine Kühlstation bereitgestellt werden, bei welcher beispielsweise eine Seite als Abgabeseite und die andere Seite als Entnahmeseite für einen Industrieroboter dient.
Der Industrieroboter ist bevorzugt mit einer Einrichtung zum Erkennen ausgestattet, insbesondere mit einem Kennzeichenleser zum Lesen eines an einem Produktträger und/oder einer Behandlungsstation angebrachten Kennzeichens.

Beispielsweise können somit verschiedene Produktträger für verschiedene Produkte gleichzeitig verwendet werden, wobei die Steuereinrichtung oder eine entsprechend ausgebildete, weitere Einheit den Produktträger erkennt und eine entsprechende Behandlung/Bearbeitung durchführt. Ferner ist durch die Kennzeichnung der Bearbeitungsstation ebenfalls möglich, die Bearbeitungsstationen auszutauschen und dem Produkt bzw. Prozess entsprechend anzuordnen, wobei die Anlage beispielsweise durch die Kennzeichnung in der Lage sein kann, selbst zu lernen, wo welche Bearbeitungseinheit positioniert ist.

Bevorzugt ist die Steuereinrichtung computerprogrammierbar und insbesondere mit einem Computerprogramm ausgestattet, das einen optimierten Transfer- und Bearbeitungsablauf erlaubt.

Dabei können beispielsweise verschiedene Programme für verschiedene Produkte in der Steuereinrichtung enthalten sein, welche die Bearbeitung verschiedener Produkte bzw. Durchführung verschiedener Prozesse erlauben. Ferner ist es möglich, durch die Optimierung der Transfer- und Bearbeitungsabläufe, dass die Kapazität und Bearbeitungsgeschwindigkeit der Anlage auf ein Maximum gesteigert wird.

Die Erfindung betrifft ferner ein Verfahren zum Transportieren mindestens eines Produktträgers, insbesondere einer Form, zwischen zwei Behandlungsstationen in einer Anlage zur Fertigung von Nahrungsmitteln, im Speziellen von Schokoladeprodukten.

Bei der Anlage kann es sich insbesondere um eine Anlage wie eingangs beschrieben handeln. Die dort betreffend die Anlage erwähnten Vorteile finden somit auch auf das erfindungsgemässe Verfahren Anwendung.

Dabei wird mindestens ein Produktträger, insbesondere eine Form, mit einem Industrieroboter befördert.

Der Produktträger wird dabei von dem Industrieroboter, zwischen zwei Behandlungsstationen, insbesondere unter Sensorkontrolle, entlang eines vorbestimmbaren Weges bewegt.

Der Produktträger wird von dem Industrieroboter an und/oder gegenüber der Kühlstation entlang eines vorbestimmbaren Weges bewegt.

Der Produktträger wird insbesondere von dem Industrieroboter, bevorzugt an und/oder gegenüber einer Behandlungsstation und/oder zwischen zwei Behandlungsstationen, gerüttelt und/oder geschleudert und/oder gewendet und/oder verdreht und/oder verschoben und/oder gehoben und/oder gesenkt und/oder beblasen und/oder abgesaugt und/oder gereinigt und/oder ein- und/oder ausstapelt und/oder ausgeschlagen und/oder entleert und/oder befüllt und/oder temperiert.

Bevorzugt wird der Produktträger von dem Industrieroboter-aus einer Behandlungsstation entnommen und/oder an eine Behandlungsstation übergeben und/oder zwischen Behandlungsstationen transportiert und/oder an einen weiteren Industrieroboter übergeben und/oder von einem weiteren Industrieroboter übernommen und/oder an eine weitere Anlage übergeben und/oder von einer weiteren Anlage übernommen.

Der Produktträger durchläuft mittels des Industrieroboters die Schritte eines Herstellungsprozesses mit Bearbeitungsschritten an und/oder zwischen Behandlungsstationen oder wird aus dem Herstellungsprozess ausgeschleust oder in den Herstellungsprozess eingeschleust.

Bevorzugt wird in einer Behandlungsstation der Produktträger gewärmt, eine Lebensmittelmasse vergossen, mindestens eine Hülsen gebildet, mindestens eine Öffnung in mindestens einer Hülse gebildet, mindestens eine Hülse gefüllt, mindestens ein Deckel gebildet, mindestens ein Halbfabrikat dekoriert und/oder bedruckt, mindestens eine Form ausgeformt, mindestens eine Form besprüht und/oder mindestens ein Produkt verpackt.

Bevorzugt erfasst der Industrieroboter, insbesondere mittels eines Sensors, die Position der mindestens einen Behandlungsstation. Insbesondere ermittelt der Industrieroboter mittels einer Prozesseinheit einen optimierten Verfahrensablauf.

Damit ist er eine flexible Anordnung der Bearbeitungsstationen möglich, da der Industrieroboter selbst die Position ermitteln kann und diese nicht vorher in die Steuereinrichtung programmiert werden muss.

Die Erfindung betrifft ferner die Verwendung eines der Industrieroboters, der mindestens einen Effektor mit mindestens eine Aufnahme für mindestens einen Produktträger und mindestens einen Manipulator zum Transfer des mindestens einen Produktträgers umfasst, in einer Anlage zur Fertigung von Nahrungsmitteln, insbesondere eine Schokoladenanlage, mit mindestens einer Behandlungsstation.

Der Industrieroboter umfasst zusätzlich zumindest eine Steuereinrichtung und bevorzugt zumindest eine zugehörige Bearbeitungseinrichtung.

Die Steuereinrichtung ist derart einstellbar, dass der Produktträger, zwischen zwei Behandlungsstationen, insbesondere unter Sensorkontrolle, entlang eines vorbestimmbaren Weges bewegbar ist.

Die Steuereinrichtung ist derart einstellbar, dass der Produktträger, an einer und/oder gegenüber der Kühlstation von dem Industrieroboter entlang eines vorbestimmbaren Weges bewegbar ist.

Die Steuereinrichtung ist insbesondere derart einstellbar, dass der Produktträger, bevorzugt an einer und/oder gegenüber einer Behandlungsstation und/oder zwischen zwei Behandlungsstationen, von dem Industrieroboter rüttelbar und/oder schleuderbar und/oder wendbar und/oder drehbar und/oder verschiebbar und/oder hebbar und/oder absenkbar und/oder beblasbar und/oder absaugbar und/oder reinigbar und/oder ein- und/oder ausstapelbar und/oder ausschlagbar und/oder entleerbar und/oder befüllbar und/oder temperierbar ist.

Die Verwendung eines Industrieroboters weist somit die gleichen Vorteile der erfindungsgemässen, eingangs genannten Anlage auf.

Die Erfindung betrifft ferner ein Verfahren zum Umrüsten einer Anlage zur Fertigung von Nahrungsmitteln, insbesondere eine Schokoladenanlage, mit mindestens einer Behandlungsstation.

Das erfindungsgemässe Verfahren umfasst dabei die folgenden Schritte:
In einem ersten Schritt erfolgt der Abbau der bestehenden Transportvorrichtung zur Beförderung von Produktträgern, insbesondere zwischen Behandlungsstationen.

In einem zweiten Schritt erfolgt die Installation von mindestens einem Industrieroboter, der mindestens einen Effektor mit mindestens eine Aufnahme für mindestens einen Produktträger und mindestens einen Manipulator zum Transfer des mindestens einen Produktträgers umfasst, wobei der Industrieroboter zusätzlich zumindest eine Steuereinrichtung und bevorzugt zumindest eine zugehörige Bearbeitungseinrichtung umfasst.

Die Steuereinrichtung ist dabei derart einstellbar, dass der Produktträger, bevorzugt an einer oder gegenüber einer Behandlungsstation, rüttelbar, schleuderbar, wendbar, drehbar, verschiebbar, hebbar, absenkbar, beblasbar, absaugbar, reinigbar, ein- und/oder ausstapelbar, ausschlagbar, entleerbar, befüllbar, temperierbar, und/oder insbesondere unter Sensorkontrolle, entlang eines vorbestimmbaren Weges bewegbar ist.

Es ist somit möglich, eine bereits bestehende Anlage mit einem Industrieroboter auszustatten. Die somit umgerüstete Anlage weist die gleichen Vorteile der erfindungsgemässen Anlage auf und eignet sich insbesondere zur Durchführung des erfindungsgemässen Verfahrens.

Die Erfindung wird nachfolgend anhand eines bevorzugten Ausführungsbeispiels in Verbindung mit der Zeichnung beschrieben. Es zeigen:
- Fig. 1: eine Draufsicht einer bevorzugten Anordnung einer erfindungsgemässen Anlage,
- Fig. 2: eine perspektivische Ansicht der Anlage der Figur 1,
- Fig. 3: eine weitere perspektivische Ansicht der Anlage der Figur 1,
- Fig. 4: eine dritte perspektivische Ansicht der Anlage der Figur 1, und
- Fig. 5: eine perspektivische Seitenansicht der Anlage der Figur 1.

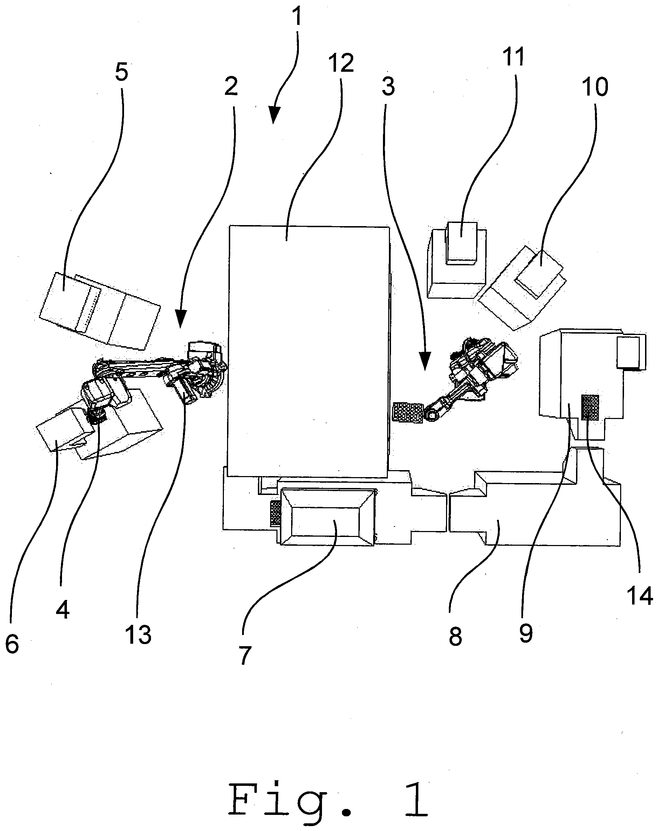

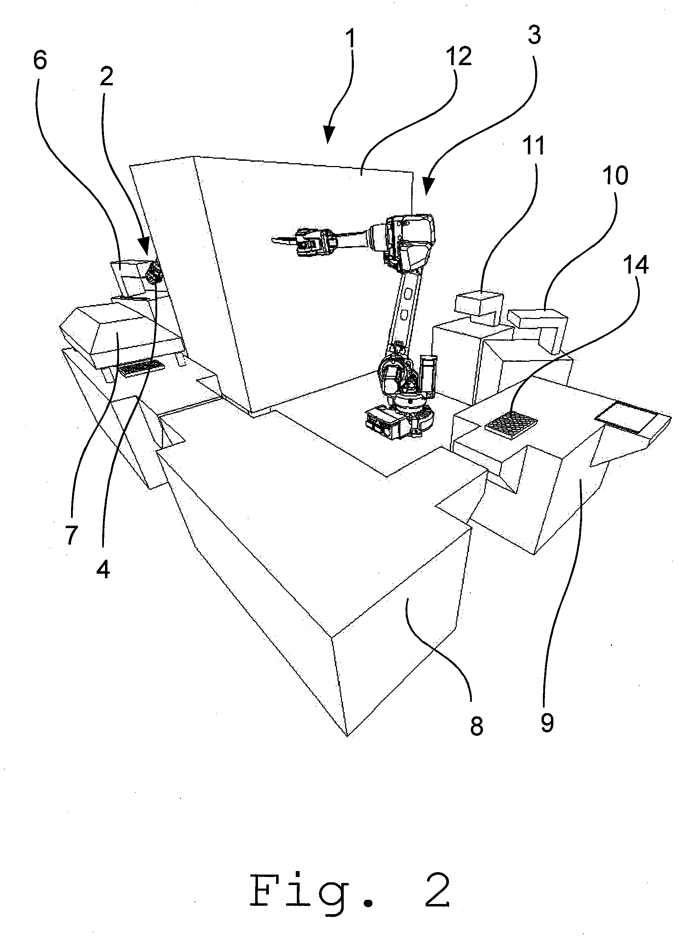

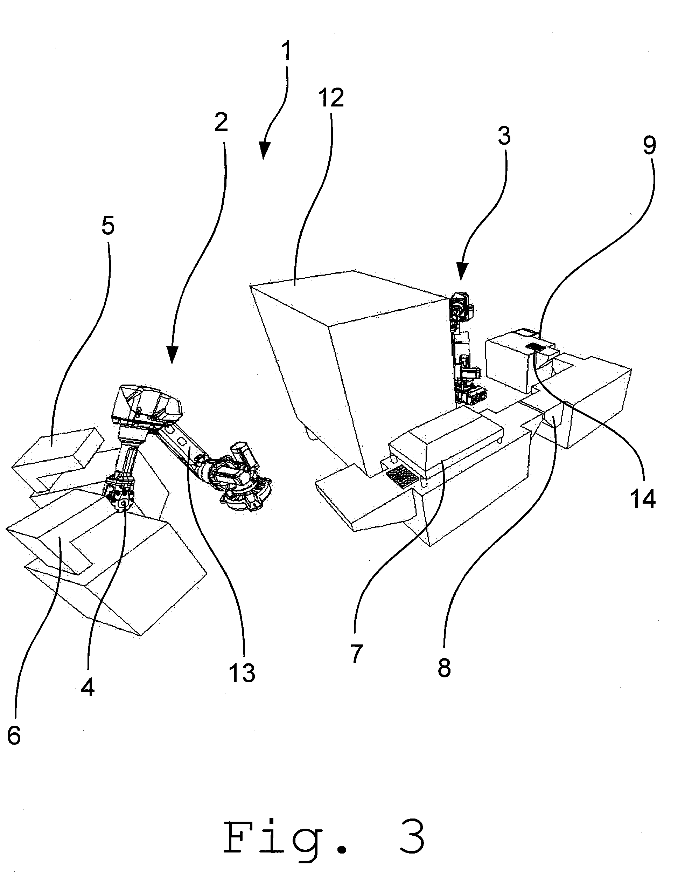

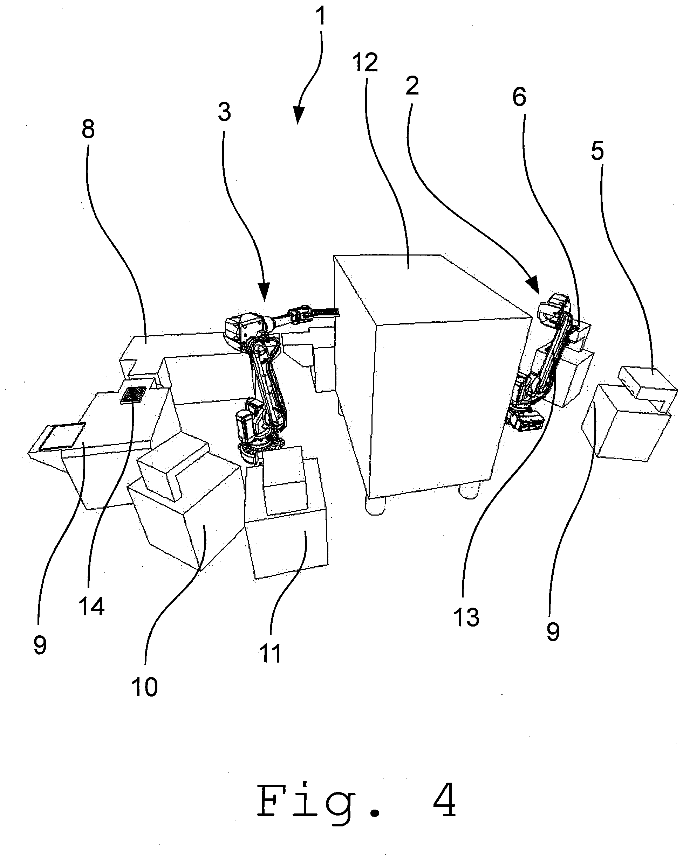

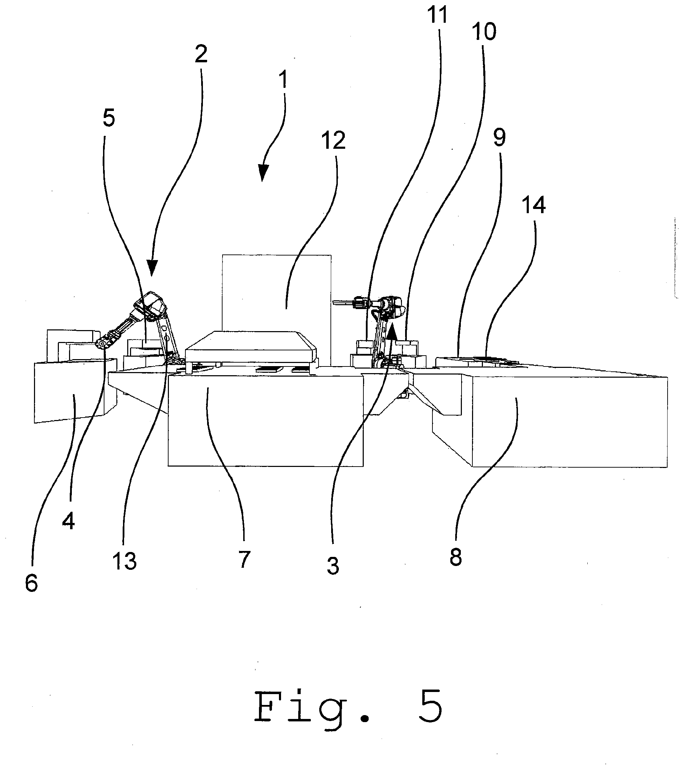

In den Figuren 1 bis 5 ist eine Anlage 1 zur Herstellung von Schokoladenpralinen gezeigt, welche zwei Industrieroboter 2 und 3 umfasst. Die Industrieroboter 2 und 3 sind als Roboterarm 13 mit einem Greifabschnitt 4 ausgebildet und räumlich fest angeordnet. Mit dem Greifabschnitt 4 ist ein Produktträger 14 in Form einer Giessform 14, (wobei der Übersichtlichkeit halber nur ein Produktträger mit einem Bezugszeichen versehen ist) greifbar. Der Industrieroboter 2 bzw. 3 erlaubt ferner die Handhabung des Produktträgers 14, so dass der Produktträger 14 in verschiedene Richtungen bzw. um verschiedene Achsen bewegbar bzw. drehbar ist.

In Reichweite des Industrieroboters 2 bzw. 3 ist eine Mehrzahl von Behandlungsstationen 5 - 12 angeordnet. Bei den Behandlungsstationen handelt es sich um eine Hülsenbildungsstation 5, eine Giessstation 6, einen Formenanwärmer 7, eine Ein- und Ausstapelstation 8, eine Ausformstation 9, eine Dekorierstation 10, eine Füllstation 11 und eine Kühlstation 12.

Die Kühlstation 12 ist zentral angeordnet und ist von jeweils einem Industrieroboter 2 bzw. 3 von einer jeweiligen Seite bedienbar. Die Produktträger 14 können beispielsweise nach einem Bearbeitungsschritt vom Industrieroboter 2 in die Kühlstation 12 eingeschoben werden und vom Industrieroboter 3 an der gegenüberliegenden Seite entnommen werden, ggf. nachdem der Produktträger 14 und/oder die darin enthaltenen (Halb-)Fabrikate eine vorbestimmte Temperatur erreicht haben oder beim Erreichen einer vorbestimmten Temperierzeit.

Die Kühlstation 12 kann mehrere Kühlzonen aufweisen, so dass nach einem Bearbeitungsschritt die entsprechende Abkühlung/Temperierung stattfinden kann, ohne dass eine zusätzliche Kühlstation notwendig ist.

Durch die "freie" Anordnung der Behandlungsstationen 5 - 12 können diese den Bedürfnissen entsprechend angeordnet werden. Auch können, je nach Produkt, die Behandlungsstationen anders angeordnet oder zusätzliche Behandlungsstationen hinzugefügt bzw. nicht benötigte Behandlungsstationen entfernt werden.

Bei diesem Ausführungsbeispiel wird ein Produktträger 14 von der Ein- und Ausstapelstation 8 vom Industrieroboter 3 zum Formenanwärmer 7 bewegt. Der Produktträger 14 wird dann nach dem Anwärmen vom Industrieroboter 2 zur Giessstation 6 gefördert, wo Schokolade zur Hülsenbildung gegossen wird. Anschliessend wird der Produktträger 14 vom Industrieroboter 2 zur Hülsenbildungsstation 5, wo die Hülse durch Bewegen des Produktträgers 14 gegenüber einem nicht gezeigten Stempel gebildet wird, und anschliessend zur Kühlstation 12 gefördert. Der Industrieroboter 2 kann, wenn der Produktträger 14 von der Giessstation 6 zur Hülsenbildungsstation 5 gefördert wird, ebenfalls den Produktträger 14 bewegen und die Hülsenbildung zumindest teilweise durchführen.

Nachdem die Hülsen abgekühlt worden sind, wird der Produktträger 14 vom Industrieroboter 3 von der Kühlstation entnommen und zur Füllstation 11 transportiert, wo die Hülsen gefüllt werden, und anschliessend zurück zur Kühlstation 12 bewegt.

An einer Deckelstation oder an der Füllstation 11 kann ausserdem ein Deckel angebracht werden. Bei der Füllstation 11 kann es sich auch um eine "One-Shot"-Station handeln, an der gleichzeitig eine Hülle und eine Füllung abgegeben werden.

Nachdem die fertigen Pralinen abgekühlt worden sind kann der Produktträger 14 vom Industrieroboter 3 zur Dekorierstation 10 gefördert werden, wo die Pralinen dekoriert werden.

Die Pralinen werden mittels der Ausformstation 9 aus dem Produktträger 14 entnommen und weiter verarbeitet, z.B. verpackt. Die Verpackung kann auch mittels einer dazu ausgebildete Behandlungsstation erfolgen, welche vom Industrieroboter 2 oder 3 bedient wird. Bei der Ausformstation 9 kann der Industrieroboter 3 den Produktträger 14 drehen und ggf. derart bewegen, dass die fertigen Pralinen aus dem Produktträger 14 entfernt werden.

Der leere Produktträger 14 wird anschliessend, ggf. nach einer Reinigung, vom Industrieroboter 3 zur Ein- und Ausstapelstation 8 gefördert.

## Patentansprüche

1. Anlage (1) zur Fertigung von Nahrungsmitteln, insbesondere eine Schokoladenanlage, mit mindestens einer Behandlungsstation und mit mindestens einem Industrieroboter (2, 3), der mindestens einen Effektor (4) mit mindestens einer Aufnahme für mindestens einen Produktträger (14) und mindestens einen Manipulator (13) zum Transfer des mindestens einen Produktträgers (14) umfasst, **dadurch gekennzeichnet, dass**
der Industrieroboter (2, 3) zusätzlich zumindest eine Steuereinrichtung umfasst,
wobei die Steuereinrichtung derart eingestellt oder einstellbar ist, dass
der Produktträger (14) zwischen zwei Behandlungsstationen, insbesondere unter Sensorkontrolle, entlang eines vorbestimmbaren Weges bewegbar ist
und
wobei es sich bei einer Behandlungsstation um
eine Kühlstation (12) handelt, die von mehr als einer Seite bedienbar ist, die derart zentral angeordnet ist, dass sie mehrfach während eines Produktionsvorganges verwendbar ist und die Steuereinrichtung derart eingestellt oder einstellbar ist, dass
der Produktträger (14) an der Kühlstation (12) und/oder gegenüber der Kühlstation (12) entlang eines Vorbestimmbaren Weges bewegbar ist.

2. Anlage gemäss Anspruch 1, wobei die Steuereinrichtung derart eingestellt oder einstellbar ist, dass der Produktträger (14)
- an einer und/oder zwischen zwei Behandlungsstationen rüttelbar ist und/oder
- an einer und/oder zwischen zwei Behandlungsstationen schleuderbar ist und/oder
- an einer Behandlungsstation mit oder gegenüber Komponenten einer Behandlungsstation bewegbar ist und/oder
- an einer und/oder zwischen zwei Behandlungsstationen beblasbar ist und/oder
- an einer und/oder zwischen zwei Behandlungsstationen absaugbar ist und/oder
- an einer und/oder zwischen zwei Behandlungsstationen reinigbar ist und/oder
an einer Behandlungsstation oder zwischen zwei Behandlungsstationen ausschlagbar ist und/oder
- an einer Behandlungsstation oder zwischen zwei Behandlungsstationen entleerbar ist und/oder
- an einer Behandlungsstation oder zwischen zwei Behandlungsstationen befüllbar ist und/oder
- zwischen zwei Behandlungsstationen ein- und/oder ausstapelbar ist und/oder
- an einer und/oder zwischen zwei Behandlungsstationen wendbar ist und/oder
- an einer und/oder zwischen zwei Behandlungsstationen drehbar ist und/oder
- an einer und/oder zwischen zwei Behandlungsstationen hebbar ist und/oder
- an einer und/oder zwischen zwei Behandlungsstationen absenkbar ist und/oder
- temperierbar ist.

3. Anlage gemäss Anspruch 1 oder 2, **dadurch gekennzeichnet, dass**
es sich bei der Behandlungsstation um einen Formenanwärmer (7), eine Giessstation (6), eine Hülsenbildungsstation (5), eine Öffnungsbildungsstation, eine Füllstation (11), eine Deckelstation, eine Dekorierstation (10), eine Ausformstation (9), eine Ein- und/oder Ausstapelstation (8), eine Sprühstation, eine Druckerstation, eine Einlegestation, eine Verpackungsstation und/oder eine Auflegestation, insbesondere eine Folienauflegestation, handelt.

4. Anlage gemäss Anspruch 1, 2 oder 3, **dadurch gekennzeichnet, dass** der Industrieroboter (2, 3) zusätzlich zumindest eine zugehörige Bearbeitungseinrichtung umfasst und
es sich bei der Bearbeitungseinrichtung um eine Rütteleinrichtung, eine Schleudereinrichtung, eine Wendeeinrichtung, eine Verschiebeeinrichtung, eine Hebe-und/oder Senkeinrichtung, eine Verdreheinrichtung, eine Schabereinrichtung, eine Rolleinrichtung, eine Blaseinrichtung und/oder eine Saugeinrichtung handelt.

5. Anlage gemäss mindestens einem der Ansprüche 1 bis 4,
**dadurch gekennzeichnet, dass**
die Behandlungsstationen zumindest teilweise mechanisch voneinander unabhängig sind, und wobei die Behandlungsstationen insbesondere unabhängig voneinander in Betrieb nehmbar sind.

6. Anlage gemäss mindestens einem der Ansprüche 1 bis 5,
**dadurch gekennzeichnet, dass**
der Industrieroboter (2, 3) verfahrbar ist oder fest an einer Raumposition, zum Beispiel auf dem Boden, an der Wand und/oder an der Decke, insbesondere direkt oder über ein Gestell, verankert ist.

7. Anlage gemäss mindestens einem der Ansprüche 1 bis 6,
**dadurch gekennzeichnet, dass** die Kühlstation (12) mehrere Kühlzonen aufweist.

8. Anlage gemäss mindestens einem der Ansprüche 1 bis 7,
**dadurch gekennzeichnet, dass** der Industrieroboter (2,3) mit einer Einrichtung zum Erkennen ausgestattet ist, insbesondere mit einem Kennzeichenleser zum Lesen eines an einem Produktträger (14) und/oder einer Behandlungsstation angebrachten Kennzeichens.

9. Anlage gemäss mindestens einem der Ansprüche 1 bis 8,
**dadurch gekennzeichnet, dass** die Steuereinrichtung computerprogrammierbar ist und insbesondere mit einem Computerprogramm ausgestattet ist, das einen optimierten Transfer- und Bearbeitungsablauf erlaubt.

10. Verfahren zum Transportieren mindestens eines Produktträgers (14), insbesondere einer Form, zwischen zwei Behandlungsstationen in einer Anlage (1) zur Fertigung von Nahrungsmitteln, im Speziellen von Schokoladeprodukten, gemäss einem der Ansprüche 1 bis 9, wobei mindestens ein Produktträger (14), insbesondere eine Form, mit einem Industrieroboter (2, 3) befördert wird,
**dadurch gekennzeichnet, dass**
der Produktträger (14) von dem Industrieroboter (2, 3) zwischen zwei Behandlungsstationen, insbesondere unter Sensorkontrolle, entlang eines vorbestimmbaren Weges bewegt wird und
der Produktträger (14) von dem Industrieroboter (2, 3) mindestens dem folgenden Verfahrensschritt unterzogen wird:
der Produktträger (14) wird von dem Industrieroboter (2, 3) an einer Kühlstation(12) und/oder gegenüber der Kühlstation (12), die von mehr als einer Seite bedienbar ist und die derart zentral angeordnet ist, dass sie mehrfach während eines Produktionsvorganges verwendbar ist, entlang eines vorbestimmbaren Weges bewegt.

11. Verfahren gemäss Anspruch 10, **dadurch gekennzeichnet, dass** der Produktträger (14) von dem Industrieroboter (2, 3) mindestens einem der folgenden Verfahrensschritte unterzogen wird bei welchem er
- an einer und/oder zwischen zwei Behandlungsstationen gerüttelt wird,
- an einer und/oder zwischen zwei Behandlungsstationen geschleudert wird,
- an einer Behandlungsstation mit oder gegenüber Komponenten einer Behandlungsstation bewegt wird,
- an einer und/oder zwischen zwei Behandlungsstationen beblasen wird,
- an einer und/oder zwischen zwei Behandlungsstationen abgesaugt wird,
- an einer und/oder zwischen zwei Behandlungsstationen gereinigt wird,
- an einer und/oder zwischen zwei Behandlungsstationen ausgeschlagen wird,
- an einer und/oder zwischen zwei Behandlungsstationen entleert wird,
- an einer und/oder zwischen zwei Behandlungsstationen befüllt wird,
- temperiert wird,
- an einer und/oder zwischen zwei Behandlungsstationen gewendet wird,
- an einer und/oder zwischen zwei Behandlungsstationen verdreht wird,
- an einer und/oder zwischen zwei Behandlungsstationen gehoben wird,
- an einer und/oder zwischen zwei Behandlungsstationen gesenkt wird,
- zwischen zwei Behandlungsstationen ein- und/oder ausgestapelt wird.

12. Verfahren gemäss Anspruch 10 oder 11, **dadurch gekennzeichnet, dass** der Produktträger (14) von dem Industrieroboter
- aus einer Behandlungsstation entnommen wird und/oder
- an eine Behandlungsstation übergeben wird und/oder
- zwischen Behandlungsstationen transportiert wird und/oder
- an einen weiteren Industrieroboter übergeben wird und/oder
- von einem weiteren Industrieroboter übernommen wird und/oder
- an eine weitere Anlage übergeben wird und/oder
- von einer weiteren Anlage übernommen wird.

13. Verfahren gemäss Anspruch 10, 11 oder 12, **dadurch gekennzeichnet, dass** in einer Behandlungsstation
- der Produktträger (14) gewärmt wird,
- eine Lebensmittelmasse vergossen wird,
- mindestens eine Hülsen gebildet wird,
- mindestens eine Öffnung in mindestens einer Hülse gebildet wird,
- mindestens eine Hülse gefüllt wird,
- mindestens ein Deckel gebildet wird,
- mindestens ein Halbfabrikat dekoriert und/oder bedruckt wird,
- mindestens eine Form ausgeformt wird,
- mindestens eine Form besprüht und/oder
- mindestens ein Produkt verpackt wird.

14. Verfahren gemäss einem der Ansprüche 10 bis 13, **dadurch gekennzeichnet, dass** der Industrieroboter (2, 3), insbesondere mittels eines Sensors, die Position der mindestens einen Behandlungsstation erfasst und insbesondere einen optimierten Verfahrensablauf ermittelt.

15. Verwendung eines Industrieroboters (2, 3), der mindestens einen Effektor (4) mit mindestens einer Aufnahme für mindestens einen Produktträger (14) und mindestens einen Manipulator (13) zum Transfer des mindestens einen Produktträgers (14) umfasst, in einer Anlage zur Fertigung von Nahrungsmitteln, insbesondere einer Schokoladenanlage, mit mindestens einer Behandlungsstation,
wobei der Industrieroboter (2, 3) zusätzlich zumindest eine Steuereinrichtung und bevorzugt zumindest eine zugehörige Bearbeitungseinrichtung umfasst,
wobei die Steuereinrichtung derart einstellbar ist, dass der Produktträger (14) zwischen zwei Behandlungsstationen, insbesondere unter Sensorkontrolle, entlang eines vorbestimmbaren Weges bewegbar ist, und die Steuereinrichtung derart einstellbar ist, dass der Produktträger (14) an einer Kühlstation (12) und/oder gegenüber einer Kühlstation (12), die von mehr als einer Seite bedienbar ist und die derart zentral angeordnet ist, dass sie mehrfach während eines Produktionsvorganges verwendbar ist, entlang eines vorbestimmbaren Weges bewegbar ist.

## Claims

1. An installation (1) for producing foodstuffs, in particular a chocolate installation, having at least one treatment station and having at least one industrial robot (2, 3) which comprises at least one effector (4) with at least one receptacle for at least one product carrier (14) and at least one manipulator (13) for transferring the at least one product carrier (14), **characterized in that** the industrial robot (2, 3) additionally comprises at least one control device,
the control device being set or adjustable in such a way that the product carrier (14) can be moved between two treatment stations, in particular under sensor control, along a predeterminable path
and
wherein a treatment station is a cooling station (12) which is operable from more than one side and which is centrally arranged such that it can be used several times during a production process, and the control device is set or adjustable such that the product carrier (14) is movable at the cooling station (12) and/or relative to the cooling station (12) along a predeterminable path.

2. An installation according to claim 1, the control device being set or adjustable in such a way that the product carrier (14)
- can be vibrated at and/or between two treatment stations, and/or
- can be centrifuged at and/or between two treatment stations, and/or
- is movable at a treatment station with or against components of a treatment station and/or
- can be blown at and/or between two treatment stations, and/or
- can be sucked off at and/or between two treatment stations and/or
- is cleanable at and/or between two treatment stations and/or
- can be cleared out by impact at a treatment station or between two treatment stations, and/or
- can be emptied at a treatment station or between two treatment stations, and/or
- can be filled at one treatment station or between two treatment stations and/or
- can be stacked and/or unstacked between two treatment stations and/or
- is reversible at and/or between two treatment stations and/or
- can be rotated at and/or between two treatment stations and/or
- can be lifted at and/or between two treatment stations and/or
- can be lowered at and/or between two treatment stations and/or
- is temperable.

3. An installation in accordance with claim 1 or 2, **characterized in that** the treatment station is a mould heater (7), a casting station (6), a sleeve forming station (5), an opening forming station, a filling station (11), a lid station, a decorating station (10), a moulding station (9), a stacking station (8), a spraying station, a printing station, a loading station, a packaging station and/or a depositing station, in particular a film depositing station.

4. An installation according to claim 1, 2 or 3, **characterized in that** the industrial robot (2, 3) additionally comprises at least one associated processing device and the processing device is a jogging device, a centrifugal device, a turning device, a displacement device, a lifting and/or lowering device, a twisting device, a scraping device, a rolling device, a blowing device and/or a suction device.

5. An installation in accordance with at least one of claims 1 to 4, **characterized in that** the treatment stations are at least partially mechanically independent of one another, and wherein the treatment stations are in particular operable independently of one another.

6. An installation in accordance with at least one of claims 1 to 5, **characterised in that** the industrial robot (2, 3) is movable or is firmly anchored to a spatial position, for example on the floor, on the wall and/or on the ceiling, in particular directly or via a frame.

7. An installation in accordance with at least one of claims 1 to 6, **characterized in that** the cooling station (12) has a plurality of cooling zones.

8. An installation according to at least one of claims 1 to 7, **characterized in that** the industrial robot (2, 3) is equipped with a device for recognition, in particular with a label reader for reading a label attached to a product carrier (14) and/or a treatment station.

9. An installation in accordance with at least one of claims 1 to 8, **characterized in that** the control device is computer-programmable and in particular is equipped with a computer program which permits an optimised transfer and processing sequence.

10. Method for transporting at least one product carrier (14), in particular a mould, between two treatment stations in an installation (1) for producing foodstuffs, in particular chocolate products, in accordance with one of claims 1 to 9, at least one product carrier (14), in particular a mould, being transported by an industrial robot (2, 3), **characterised in that** the product carrier (14) is moved by the industrial robot (2, 3) between two treatment stations, in particular under sensor control, along a predeterminable path, and the product carrier (14) is subjected to at least the following process step by the industrial robot (2, 3): the product carrier (14) is moved along a predetermined path by the industrial robot (2, 3) at a cooling station (12) and/or relative to the cooling station (12), which is operable from more than one side and which is centrally arranged such that it can be used several times during a production process.

11. Method according to claim 10, **characterized in that** the product carrier (14) is subjected by the industrial robot (2, 3) to at least one of the following method steps in which it:
- is vibrated at and/or between two treatment stations,
- is centrifuged at and/or between two treatment stations,
- is moved at a treatment station with or in relation to components of a treatment station,
- is blown at and/or between two treatment stations,
- is evacuated at and/or between two treatment stations,
- is cleaned at and/or between two treatment stations,
- is cleared out by impact at and/or between two treatment stations,
- is emptied at and/or between two treatment stations,
- is filled at and/or between two treatment stations,
- is tempered,
- is turned at and/or between two treatment stations,
- is rotated at and/or between two treatment stations,
- is lifted at and/or between two treatment stations,
- is lowered at and/or between two treatment stations,
- is stacked and/or unstacked between two treatment stations.

12. Method according to claim 10 or 11, **characterized in that** the product carrier (14) supported by the industrial robot
- is removed from a treatment station and/or
- is transferred to a treatment station and/or
- is transported between treatment stations and/or
- is transferred to another industrial robot, and/or
- is taken over by another industrial robot, and/or
- is transferred to another installation, and/or
- is taken over by another installation.

13. Method according to claim 10, 11 or 12, **characterized in that**, in a treatment station
- the product carrier (14) is heated,
- a food mass is poured,
- at least one sleeve is formed,
- at least one opening is formed in at least one sleeve,
- at least one sleeve is filled,
- at least one lid is formed,
- at least one semi-finished product is decorated and/or imprinted,
- at least one mould is demolded,
- at least one mould sprayed
and/or
- at least one product is packaged.

14. Method according to one of the claims 10 to 13, **characterized in that** the industrial robot (2, 3), in particular by means of a sensor, detects the position of the at least one treatment station and in particular determines an optimized process sequence.

15. Use of an industrial robot (2, 3) comprising at least one effector (4) with at least one receptacle for at least one product carrier (14) and at least one manipulator (13) for transferring the at least one product carrier (14), in an installation for producing foodstuffs, in particular a chocolate installation, having at least one treatment station, wherein the industrial robot (2, 3) additionally comprises at least one control device and preferably at least one associated processing device, the control device being adjustable such that the product carrier (14) can be moved along a predeterminable path between two treatment stations, in particular under sensor control, and the control device can be set such that the product carrier (14) can be moved along a predeterminable path at a cooling station (12) and/or relative to a cooling station (12) which can be operated from more than one side and which is arranged centrally such that it can be used several times during a production process.

## Revendications

1. Installation (1) pour la fabrication de produits alimentaires, en particulier une installation de chocolat, comportant au moins une station de traitement et au moins un robot industriel (2, 3) qui comprend au moins un effecteur (4) avec au moins un récipient pour au moins un support de produit (14) et au moins un manipulateur (13) pour transférer le au moins un support de produit (14), **caractérisé en ce que** le robot industriel (2, 3) comprend en outre au moins un dispositif de commande, le dispositif de commande étant réglé ou réglable de telle sorte que le support de produit (14) peut être déplacé le long d'un trajet prédéterminé entre deux stations de traitement, en particulier sous commande par capteur
et
dans laquelle une station de traitement est une station de refroidissement (12) qui peut être actionnée de plus d'un côté, qui est arrangée de façon centrale de façon à pouvoir être utilisée plusieurs fois pendant une opération de production, et le dispositif de commande est réglé ou réglable de façon que le support de produit (14) est déplaçable au niveau de la station de refroidissement (12) et/ou par rapport en face de la station de refroidissement (12) le long d'un trajet prédéfinissable.

2. Installation selon la revendication 1, le dispositif de commande étant réglé ou réglable de telle sorte que le support de produit (14)
- peut être secoué à une et/ou entre deux stations de traitement, et/ou
- peut être centrifugé à et/ou entre deux stations de traitement, et/ou
- peut être bougé dans une station de traitement avec ou par rapport à des composants d'une station de traitement et/ou
- peut être insufflé à une et/ou entre deux stations de traitement, et/ou
- peut être aspiré à et/ou entre deux stations de traitement et/ou
- est nettoyable à et/ou entre deux stations de traitement et/ou
_{[PK1]} peut être tapoté dans une station de traitement ou entre deux stations de traitement, et/ou
- peut être vidé dans une station de traitement ou entre deux stations de traitement, et/ou
- peut être rempli à une station de traitement ou entre deux stations de traitement et/ou
- peut être empilé et/ou dépilé entre deux stations de traitement et/ou
- peut être tourné à l'envers à et/ou entre deux stations de traitement et/ou
- peut être tourné à et/ou entre deux stations de traitement et/ou
- peut être soulevé à et/ou entre deux stations de traitement et/ou
- peut être abaissés à et/ou entre deux stations de traitement et/ou
- est tempérable.

3. Installation selon la revendication 1 ou 2, **caractérisée en ce que** la station de traitement est un dispositif de chauffage de moule (7), une station de fonderie (6), une station de formage de fourreaux (5), une station de formage d'ouverture, une station de remplissage (11), une station de couvercle, une station de décoration (10), une station de demoulage (9), une station (8) de empilage et/ou dépilage, une station de pulvérisation, une station d'imprimante, une station pour insérer, une station d'emballageet/ou une station de deposage, notamment une station de deposage de film.

4. Installation selon la revendication 1, 2 ou 3, **caractérisée en ce que** le robot industriel (2, 3) comprend en outre au moins un dispositif de traitement associé, et le dispositif de traitement est un dispositif secouant, un dispositif centrifuge, un dispositif de rotation, un dispositif de déplacement, un dispositif de levage et/ou d'abaissement, un dispositif de torsion, un dispositif à racler, un dispositif de roulement, un dispositif de soufflage et/ou un dispositif d'aspiration.

5. Installation selon au moins l'une des revendications 1 à 4, **caractérisée en ce que** les stations de traitement sont au moins partiellement indépendantes mécaniquement les unes des autres et, en particulier, les stations de traitement peuvent être mises en service indépendamment les unes des autres.

6. Installation selon au moins l'une des revendications 1 à 5, **caractérisée en ce que** le robot industriel (2, 3) peut être déplacé ou est solidement ancré dans une position spatiale, par exemple sur le sol, au mur et/ou au plafond, en particulier directement ou via un cadre.

7. Installation selon au moins l'une des revendications 1 à 6, **caractérisée en ce que** la station de refroidissement (12) présente plusieurs zones de refroidissement.

8. Installation selon au moins l'une des revendications 1 à 7, **caractérisée en ce que** le robot industriel (2, 3) est équipé d'un dispositif de reconnaissance, en particulier d'un lecteur d'identificateur pour lire un identificateur fixée sur un support (14) du produit et/ou une station de traitement.

9. Installation selon au moins l'une des revendications 1 à 8, **caractérisée en ce que** le dispositif de commande est programmable par ordinateur et est notamment équipé d'un programme informatique qui permet une séquence de transfert et de traitement optimisée.

10. Procédé de transport d'au moins un support de produit (14), en particulier un moule, entre deux stations de traitement dans une installation (1) de fabrication de produits alimentaires, en particulier de produits chocolats, selon l'une des revendications 1 à 9, au moins un support de produit (14), en particulier un moule, étant transporté par un robot industriel (2, 3), **caractérisé en ce que** le support de produit (14) est déplacé par le robot industriel (2, 3) entre deux stations de traitement, en particulier sous commande de capteurs, le long d'une trajectoire prédéfinissable, et le support de produit (14) est soumis au moins à l'étape de processus suivante par le robot industriel (2, 3) : le support de produit (14) est déplacé le long d'un trajet prédéterminé par le robot industriel (2, 3) à une station de refroidissement (12) et/ou par rapport à la station de refroidissement (12), qui peut être actionné depuis plusieurs côtés et est disposée de façon centrale de telle sorte à pouvoir être utilisée plusieurs fois pendant un procédé de production.

11. Procédé selon la revendication 10, **caractérisé en ce que** le support de produit (14) est soumis par le robot industriel (2, 3) à au moins l'une des étapes de procédé suivantes dans lesquelles il :
- est secoué à et/ou entre deux stations de traitement,
- est centrifugée à et/ou entre deux stations de traitement,
- est déplacé dans une station de traitement avec ou par rapport les composants d'une station de traitement,
- est insufflé dans et/ou entre deux stations de traitement,
- est aspirée à et/ou entre deux stations de traitement,
- est nettoyé à et/ou entre deux stations de traitement,
- est tapoté à et/ou entre deux stations de traitement,
- est vidé à et/ou entre deux stations de traitement,
- est rempli à et/ou entre deux stations de traitement,
- est tempéré,
- est tourné à l'envers sur et/ou entre deux stations de traitement,
- est tourné à et/ou entre deux stations de traitement,
- est soulevé à et/ou entre deux stations de traitement,
- est abaissé à et/ou entre deux stations de traitement,
- est empilé et/ou dépilé entre deux stations de traitement.

12. Procédé selon la revendication 10 ou 11, **caractérisé en ce que** le support de produit (14) est, par le robot industriel,
- retiré d'une station de traitement et/ou
- transféré à une station de traitement et/ou
- transporté entre des stations de traitement et/ou
- transféré à un autre robot industriel, et/ou
- reprise par un autre robot industriel, et/ou
- transféré à une autre installation, et/ou
- reprise par une autre installation.

13. Procédé selon la revendication 10, 11 ou 12, **caractérisé en ce que**, dans une station de traitement
- le support de produit (14) est chauffé,
- une masse de produit alimentaire est coulée,
- au moins un fourreau est formé,
- au moins une ouverture est formée dans au moins un fourreau,
- au moins un fourreau est rempli,
- au moins un couvercle est formé,
- au moins un produit semi-fini est décoré et/ou imprimé,
- au moins un moule est façonné,
- au moins un moule est pulvérisé
et/ou
- au moins un produit est emballé.

14. Procédé selon l'une des revendications 10 à 13, **caractérisé en ce que** le robot industriel (2, 3), notamment au moyen d'un capteur, détecte la position d'au moins une station de traitement et détermine en particulier une séquence de traitement optimisée.

15. Utilisation d'un robot industriel (2, 3) comprenant au moins un effecteur (4) avec au moins un réceptacle pour au moins un support de produit (14) et au moins un manipulateur (13) pour transférer le au moins un support de produit (14), dans une installation pour produire des produits alimentaires, en particulier une installation à chocolat, avec au moins une station de traitement,
dans laquelle le robot industriel (2, 3) comprend en outre au moins un dispositif de commande et de préférence au moins un dispositif de traitement associé, le dispositif de commande étant réglable de telle sorte que le support de produit (14) peut être déplacé le long d'un trajet prédéfinissable entre deux stations de traitement, en particulier sous commande par capteur, et le dispositif de commande peut être réglé de telle sorte que le support de produit (14) peut être déplacé le long d'un trajet prédéfinissable à une station de refroidissement (12) et/ou par rapport à une station de refroidissement (12) qui peut être actionnée depuis plusieurs côtés et qui est disposée de manière centrale de sorte à pouvoir être utilisée plusieurs fois pendant un procédé de production.
